# FASCICULE DE BREVET EUROPEEN

(11) **EP 3 483 060 B1**
(45) Date de publication et mention de la délivrance du brevet: **04.03.2020**
(21) Numéro de dépôt: 18203432.2
(22) Date de dépôt: 30.10.2018
(51) Int. Cl.: B64C 21/06

(54) **AILE COMPORTANT UN BEC DE BORD D'ATTAQUE ET PRESENTANT DES MOYENS POUR PREVENIR LE PASSAGE A UNE COUCHE LIMITE TURBULENTE**
FLÜGEL MIT EINEM VORDERKANTENAUSLAUF UND MITTELN ZUM VERHINDERN DES ÜBERGANGS ZU EINER TURBULENTEN GRENZSCHICHT
WING WITH A LEADING EDGE SPOUT AND MEANS FOR PREVENTING THE PASSAGE TO A TURBULENT BOUNDARY LAYER

(30) Priorité: 09.11.2017 FR 1760557
(43) Date de publication de la demande: 15.05.2019
(73) Titulaire: AIRBUS OPERATIONS (S.A.S.), 31060 Toulouse (FR)
(72) Inventeur: FAROUZ-FOUQUET, Mathias, 31300 TOULOUSE (FR)
(74) Mandataire: Gicquel, Olivier Yves Gérard

(56) Documents cités:
- WO-A1-2005/113336
- WO-A2-2009/023354
- FR-A- 964 101
- FR-A- 1 311 826
- US-A1- 2011 006 165
- US-A1- 2016 052 621

## Description

### DOMAINE TECHNIQUE

La présente invention concerne une aile comportant un bec de bord d'attaque qui est mobile entre une position rétractée et une position déployée et comportant des moyens pour prévenir le passage d'une couche limite laminaire à une couche limite turbulente, ainsi qu'un aéronef comportant au moins une telle aile.

### ETAT DE LA TECHNIQUE ANTERIEURE

Une aile d'aéronef comporte une partie principale fixe et un bec de bord d'attaque (« slat » en terminologie anglo-saxonne) qui est mobile à l'avant de la partie principale et qui peut être déplacé entre une position rétractée dans laquelle il est accolé à l'avant de la partie principale et une position déployée dans laquelle il est décollé de la partie principale. Le bec de bord d'attaque permet, lorsqu'il est en position déployée, d'augmenter l'angle d'attaque en particulier à vitesse réduite.

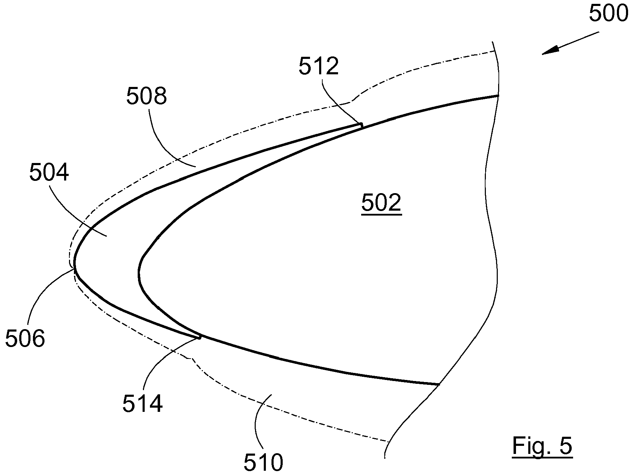

La Fig. 5 montre une vue de côté et en coupe par un plan vertical d'une aile 500 de l'état de la technique. L'aile 500 présente une partie principale 502 et un bec de bord d'attaque 504 qui est à l'avant de la partie principale 502 et qui est ici en position rétractée.

Dans la position rétractée, la ligne d'arrêt amont 506 se trouve au voisinage du bord d'attaque du bec de bord d'attaque 504 et le flux d'air se sépare de part et d'autre de la ligne d'arrêt amont 506 en un écoulement extrados 508 et un écoulement intrados 510 créant ainsi deux couches limites.

De par sa structure, le bec de bord d'attaque 504 s'étend, d'une part, le long de l'extrados de la partie principale 502, et, d'autre part, le long de l'intrados de la partie principale 502. Le bec de bord d'attaque 504 présente un bord arrière d'extrados ou bord de fuite d'extrados 512 qui, en position rétractée, est le long d'un extrados de la partie principale 502 et un bord arrière d'intrados ou bord de fuite d'intrados 514 qui, en position rétractée, est le long d'un intrados de la partie principale 502. Chacun de ces bords 512 et 514 présente une certaine épaisseur qui tend à perturber selon le cas l'écoulement extrados 508 ou l'écoulement intrados 510.

Ainsi, pour chacun de ces bords 512 et 514, l'écoulement d'air 508, 510 présente une couche limite ayant un profil de vitesse laminaire en amont dudit bord 512, 514 et une couche limite ayant un profil de vitesse turbulent en aval dudit bord 512,514.

Pour éviter ces perturbations, il est souhaitable de trouver une architecture qui prévienne le passage d'une couche limite laminaire à une couche limite turbulente. FR1311826 divulgue une aile d'un aeronef comportant une partie principale fixe et un bec de bord d'attaque mobile à l'avant de la partie principale.

### EXPOSE DE L'INVENTION

Un objet de la présente invention est de proposer une aile comportant un bec de bord d'attaque mobile entre une position rétractée et une position déployée et comportant des moyens pour prévenir le passage d'une couche limite laminaire à une couche limite turbulente.

A cet effet, est proposée une aile d'un aéronef, ladite aile comportant :
- une partie principale fixe,
- un bec de bord d'attaque mobile à l'avant de la partie principale entre une position rétractée dans laquelle il est accolé à l'avant de la partie principale et une position déployée dans laquelle il est décollé vers l'avant de la partie principale,
le bec de bord d'attaque présente un bord arrière d'extrados qui, en position rétractée, est le long d'un extrados de la partie principale et un bord arrière d'intrados qui, en position rétractée, est le long d'un intrados de la partie principale,
l'aile étant caractérisée en ce que la partie principale présente une paroi d'extrados qui, en position rétractée du bec de bord d'attaque, vient en aval et dans l'alignement du bord arrière d'extrados, et une paroi d'intrados qui, en position rétractée du bec de bord d'attaque, vient en aval et dans l'alignement du bord arrière d'intrados, en ce que l'aile présente, en position rétractée du bec de bord d'attaque, un jeu d'extrados entre l'extrémité du bord arrière d'extrados du bec de bord d'attaque et l'extrémité de la paroi d'extrados de la partie principale qui sont en regard, et un jeu d'intrados entre l'extrémité du bord arrière d'intrados du bec de bord d'attaque et l'extrémité de la paroi d'intrados de la partie principale qui sont en regard, en ce que l'aile présente un canal d'extrados en aval du jeu d'extrados et un canal d'intrados en aval du jeu d'intrados, et en ce que l'aile comprend un système d'aspiration connecté à chaque canal et agencé pour aspirer l'air contenu dans ledit canal.

Une telle architecture permet d'aspirer l'air au niveau de chaque bord arrière du bec de bord d'attaque et ainsi d'empêcher le passage de la couche limite laminaire à une couche limite turbulente.

Avantageusement, l'aile comporte un joint d'extrados qui, en position rétractée, est positionné entre la partie principale et le bec de bord d'attaque au voisinage et en amont du jeu d'extrados, et l'aile comporte un joint d'intrados qui, en position rétractée, est positionné entre la partie principale et le bec de bord d'attaque au voisinage et en amont du jeu d'intrados.

Selon un mode de réalisation particulier, le bec de bord d'attaque comporte dans le prolongement d'au moins un de ses bords arrière, une pluralité de dents, où chacune s'étend à partir dudit bord arrière et, en position rétractée, jusqu'à l'extrémité de la paroi de la partie principale en regard.

Selon un mode de réalisation particulier, l'extrémité d'au moins une paroi qui est en regard d'un bord arrière du bec de bord d'attaque prend une forme crénelée et le bord arrière prend une forme crénelée sensiblement complémentaire et il comporte une pluralité de dents, où chacune s'étend à partir dudit bord arrière et, en position rétractée, jusqu'à l'extrémité de la paroi de la partie principale en regard.

L'invention propose également un aéronef comportant au moins une aile selon l'une des variantes précédentes.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 montre une vue de dessus d'un aéronef selon l'invention,
la Fig. 2 montre une vue de côté et en coupe selon la ligne II-II d'une aile de la Fig. 1,
la Fig. 3 montre une vue en perspective d'un premier mode de réalisation de l'invention,
la Fig. 4 montre une vue en perspective d'un deuxième mode de réalisation de l'invention, et
la Fig. 5 montre une vue de côté et en coupe d'une aile de l'état de la technique.

### EXPOSE DETAILLE DE MODES DE REALISATION

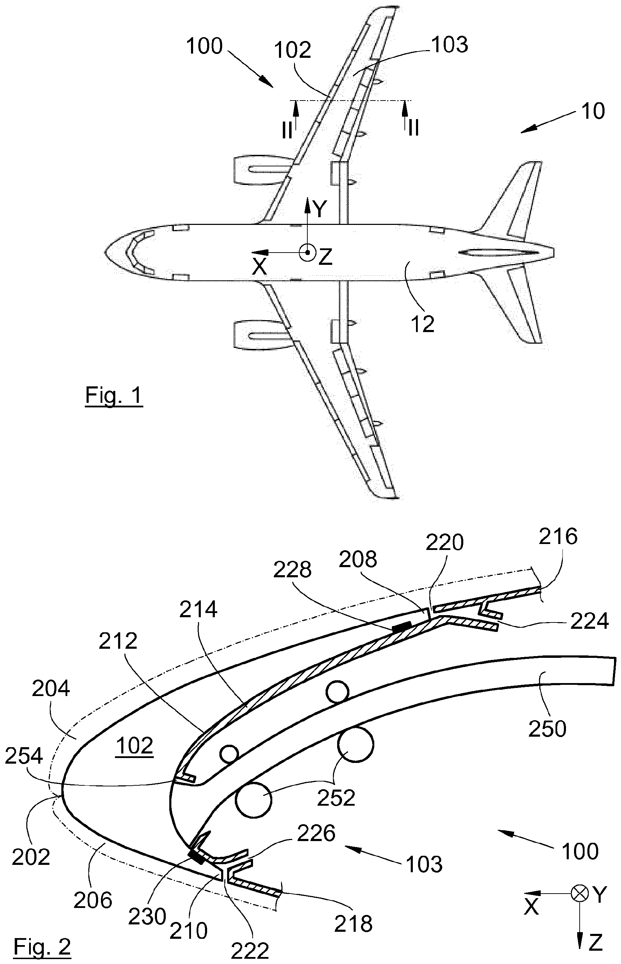

La Fig. 1 montre un aéronef 10 qui présente un fuselage 12 de part et d'autre duquel est fixée une aile 100 qui présente une partie principale 103 fixée au fuselage 12 et au moins un bec de bord d'attaque 102 qui est mobile à l'avant de la partie principale 103 et qui peut être déplacé entre une position rétractée dans laquelle il est accolé à l'avant de la partie principale 103 et une position déployée dans laquelle il est décollé vers l'avant de la partie principale 103.

Dans toute la description qui va suivre, par convention, la direction X correspond à la direction longitudinale de l'aéronef, cette direction étant parallèle à l'axe longitudinal X de l'aéronef. D'autre part, la direction Y correspond à la direction orientée transversalement par rapport à l'aéronef, et la direction Z correspond à la direction verticale ou hauteur, ces trois directions X, Y, Z étant orthogonales entre elles. L'axe longitudinal X est orienté de l'arrière vers l'avant de l'aéronef 10.

Dans la description qui suit, les termes relatifs à une position sont pris en référence par rapport au sens d'avancement normal d'un aéronef.

La Fig. 2 montre une coupe de l'aile 100 qui présente la partie principale 103 et le bec de bord d'attaque 102 qui est à l'avant de la partie principale 103 et qui est ici en position rétractée.

Dans la position rétractée, la ligne d'arrêt amont 202 se trouve au voisinage du bord d'attaque du bec de bord d'attaque 102 et le flux d'air se sépare de part et d'autre de la ligne d'arrêt amont 202 en un écoulement extrados 204 avec une couche limite et un écoulement intrados 206 avec une couche limite.

Dans le mode de réalisation de l'invention présenté sur la Fig. 2, le déplacement du bec de bord d'attaque 102 entre la position rétractée et la position déployée et inversement est assuré par au moins un vérin, au moins un rail 250 et deux paires de galets 252 pour chaque rail 250. Pour chaque paire de galets 252, le rail 250 correspondant est monté entre les deux galets 252 de ladite paire et sa partie avant est fixée au bec de bord d'attaque 102. Lorsqu'un déplacement du bec de bord d'attaque 102 est nécessaire, le ou chaque vérin agit sur le ou l'un des rails 250 pour le déplacer dans un sens ou dans l'autre tandis que ledit rail 250 est guidé par les galets 252. La partie principale 103 prend la forme d'un caisson creux ce qui permet d'y loger les rails, les vérins, et les galets, et la partie principale 103 présente ici une fenêtre 254 au niveau de sa partie avant qui permet le passage du ou de chaque rail 250. Bien sûr, une autre architecture est possible afin de commander le déplacement du bec de bord d'attaque 102.

Comme pour l'état de la technique, le bec de bord d'attaque 102 s'étend, d'une part, le long de l'extrados de la partie principale 103, et, d'autre part, le long de l'intrados de la partie principale 103. Le bec de bord d'attaque 102 présente un bord arrière d'extrados 208 qui, en position rétractée, est le long de l'extrados de la partie principale 103 et un bord arrière d'intrados 210 qui, en position rétractée, est le long de l'intrados de la partie principale 103. Chacun de ces bords 208 et 218 présente une certaine épaisseur.

En position rétractée, la face intérieure 212 du bec de bord d'attaque 102 est en appui contre une paroi extérieure 214 de la partie principale 103.

La partie principale 103 présente une paroi d'extrados 216 qui, en position rétractée, vient en aval par rapport au sens d'avancement de l'aéronef 10 et dans l'alignement du bord arrière d'extrados 208, et une paroi d'intrados 218 qui, en position rétractée, vient en aval par rapport au sens d'avancement de l'aéronef 10 et dans l'alignement du bord arrière d'intrados 210.

En position rétractée, entre l'extrémité du bord arrière d'extrados 208 et l'extrémité de la paroi d'extrados 216 qui sont en regard, l'aile 100 présente un jeu d'extrados 220. En position rétractée, entre l'extrémité du bord arrière d'intrados 210 et l'extrémité de la paroi d'intrados 218 qui sont en regard, l'aile 100 présente un jeu d'intrados 222.

Le bord arrière d'extrados 208 et l'extrémité de la paroi d'extrados 216 sont agencés pour être à fleur l'un de l'autre en position rétractée aux tolérances de fabrication près et de la même manière, le bord arrière d'intrados 210 et l'extrémité de la paroi d'intrados 218 sont agencés pour être à fleur l'un de l'autre en position rétractée aux tolérances de fabrication près.

Selon un mode de réalisation particulier, chaque jeu 220, 222 présente une largeur de l'ordre de 10 µm à quelques dixièmes de millimètres.

En aval du jeu d'extrados 220, l'aile 100 présente un canal d'extrados 224 et en aval du jeu d'intrados 222, l'aile 100 présente un canal d'intrados 226.

Chaque canal 224, 226 court à l'intérieur de la partie principale 103 et est fluidiquement connecté à un système d'aspiration de l'aile 100 qui est agencé pour aspirer l'air contenu dans ledit canal 224, 226 et par conséquent l'air extérieur au voisinage du jeu 220, 222.

L'aspiration de l'air permet de contrôler la couche limite en réduisant les perturbations au niveau du jeu 220, 222 et donc permet le maintien d'un écoulement laminaire au niveau du passage du bec de bord d'attaque 102 à la partie principale 103.

Le système d'aspiration peut être une pompe d'aspiration dédiée ou une zone de dépression du turbomoteur de l'aéronef 10. Le système d'aspiration peut être constitué d'une seule pompe d'aspiration pour les deux canaux 224 et 226 ou d'une pompe d'aspiration par canal 224, 226.

Pour assurer une bonne aspiration de l'air au voisinage du jeu d'extrados 220 et éviter les fuites d'air entre la partie principale 103 et le bec de bord d'attaque 102, l'aile 100 comporte un joint d'extrados 228 qui, en position rétractée, est positionné entre la partie principale 103 et le bec de bord d'attaque 102 au voisinage et en amont du jeu d'extrados 220. Dans l'exemple illustré en Fig. 2, le joint d'extrados 228 est solidaire de la face intérieure 212 du bec de bord d'attaque 102 et vient en appui contre la paroi extérieure 214 de la partie principale 103. Selon une variante, le joint d'extrados 228 est solidaire de la paroi extérieure 214 de la partie principale 103 et vient en appui contre la face intérieure 212 du bec de bord d'attaque 102.

De la même manière, pour assurer une bonne aspiration de l'air au voisinage du jeu d'intrados 222 et éviter les fuites d'air entre la partie principale 103 et le bec de bord d'attaque 102, l'aile 100 comporte un joint d'intrados 230 qui, en position rétractée, est positionné entre la partie principale 103 et le bec de bord d'attaque 102 au voisinage et en amont du jeu d'intrados 222. Le joint d'intrados 230 est ici solidaire de la face intérieure 212 du bec de bord d'attaque 102 et vient en appui contre la paroi extérieure 214 de la partie principale 103. Selon une variante, le joint d'intrados 230 est solidaire de la paroi extérieure 214 de la partie principale 103 et vient en appui contre la face intérieure 212 du bec de bord d'attaque 102.

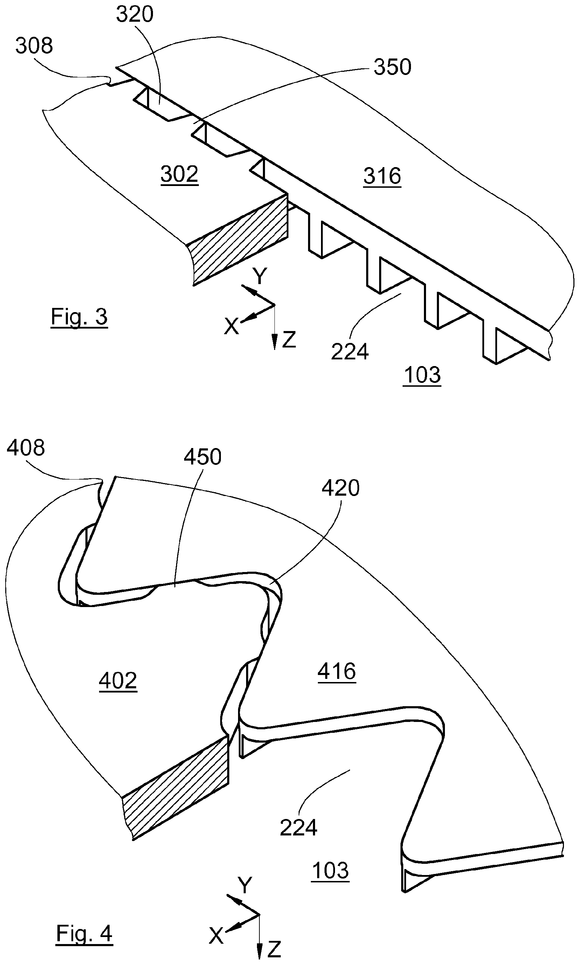

La Fig. 3 montre un premier mode de réalisation de l'invention au niveau de l'extrados de l'aile 100, mais il peut s'appliquer de la même manière à l'intrados.

Sur la Fig. 3, une partie du bec de bord d'attaque 302 a été découpée pour laisser apparaître le canal d'extrados 224 de la partie principale 103.

Pour garantir, en position rétractée, le positionnement du bec de bord d'attaque 302 par rapport à la paroi d'extrados 316, et donc la surface d'aspiration au niveau du jeu d'extrados 320, le bec de bord d'attaque 302 comporte dans le prolongement du bord arrière d'extrados 308, une pluralité de dents 350, où chacune s'étend à partir dudit bord arrière d'extrados 308 jusqu'à l'extrémité de la paroi d'extrados 316 de la partie principale 103 en regard. En position rétractée, chaque dent 350 vient en butée contre l'extrémité de la paroi d'extrados 316 et évite ainsi la fermeture du jeu d'extrados 320.

La Fig. 4 montre un deuxième mode de réalisation de l'invention au niveau de l'extrados de l'aile 100, mais il peut s'appliquer de la même manière à l'intrados.

Sur la Fig. 4, une partie du bec de bord d'attaque 402 a été découpée pour laisser apparaître le canal d'extrados 224 de la partie principale 103.

Pour garantir, en position rétractée, le positionnement du bec de bord d'attaque 402 par rapport à la paroi d'extrados 416, et donc la surface d'aspiration au niveau du jeu d'extrados 420, l'extrémité de la paroi d'extrados 416 de la partie principale 103 qui est en regard du bord arrière d'extrados 408 du bec de bord d'attaque 402 prend une forme crénelée, ici globalement sinusoïdale, et le bord arrière d'extrados 408 prend une forme crénelée sensiblement complémentaire sauf en ce qu'il comprend une pluralité de dents 450, où chacune s'étend à partir dudit bord arrière d'extrados 408 jusqu'à l'extrémité de la paroi d'extrados 416 de la partie principale 103 en regard. En position rétractée, chaque dent 450 vient en butée contre la paroi d'extrados 416 et évite ainsi la fermeture du jeu d'extrados 420.

En outre, les formes crénelées évitent la présence d'une paroi perpendiculaire à l'écoulement d'air qui pourrait apparaître du fait des dispersions géométriques ou des déformations en vol.

L'invention a été décrite à partir d'un bec de bord d'attaque mobile en position rétractée. En variante, elle peut être mise en œuvre à un bord d'attaque rapporté, dès lors qu'un jeu d'extrados et/ou un jeu d'intrados est créé.

## Revendications

1. Aile (100) d'un aéronef (10), ladite aile (100) comportant :
- une partie principale (103) fixe,
- un bec de bord d'attaque (102) mobile à l'avant de la partie principale (103) entre une position rétractée dans laquelle il est accolé à l'avant de la partie principale (103) et une position déployée dans laquelle il est décollé vers l'avant de la partie principale (103), le bec de bord d'attaque (102) présente un bord arrière d'extrados (208) qui, en position rétractée, est le long d'un extrados de la partie principale (103) et un bord arrière d'intrados (210) qui, en position rétractée, est le long d'un intrados de la partie principale (103), l'aile (100) étant telle que la partie principale (103) présente une paroi d'extrados (216) qui, en position rétractée du bec de bord d'attaque (102), vient en aval et dans l'alignement du bord arrière d'extrados (208), et une paroi d'intrados (218) qui, en position rétractée du bec de bord d'attaque (102), vient en aval et dans l'alignement du bord arrière d'intrados (210), l'aile (100) présentant, en position rétractée du bec de bord d'attaque (102), un jeu d'extrados (220) entre l'extrémité du bord arrière d'extrados (208) du bec de bord d'attaque (102) et l'extrémité de la paroi d'extrados (216) de la partie principale (103) qui sont en regard, et un jeu d'intrados (222) entre l'extrémité du bord arrière d'intrados (210) du bec de bord d'attaque (102) et l'extrémité de la paroi d'intrados (218) de la partie principale (103) qui sont en regard, l'aile (100) présentant un canal d'extrados (224) en aval du jeu d'extrados (220) et un canal d'intrados (226) en aval du jeu d'intrados (222), et l'aile (100) comprenant un système d'aspiration connecté à chaque canal (224, 226) et agencé pour aspirer l'air contenu dans ledit canal (224, 226).

2. Aile (100) selon la revendication 1, **caractérisée en ce que** l'aile (100) comporte un joint d'extrados (228) qui, en position rétractée, est positionné entre la partie principale (103) et le bec de bord d'attaque (102) au voisinage et en amont du jeu d'extrados (220), et **en ce que** l'aile (100) comporte un joint d'intrados (230) qui, en position rétractée, est positionné entre la partie principale (103) et le bec de bord d'attaque (102) au voisinage et en amont du jeu d'intrados (222).

3. Aile (100) selon l'une des revendications 1 ou 2, **caractérisée en ce que** le bec de bord d'attaque (302) comporte dans le prolongement d'au moins un de ses bords arrière (308), une pluralité de dents (350), où chacune s'étend à partir dudit bord arrière (308) et, en position rétractée, jusqu'à l'extrémité de la paroi (316) de la partie principale (103) en regard.

4. Aile (100) selon l'une des revendications 1 ou 2, **caractérisée en ce que** l'extrémité d'au moins une paroi (416) qui est en regard d'un bord arrière (408) du bec de bord d'attaque (402) prend une forme crénelée et le bord arrière (408) prend une forme crénelée sensiblement complémentaire et il comporte une pluralité de dents (450), où chacune s'étend à partir dudit bord arrière (408) et, en position rétractée, jusqu'à l'extrémité de la paroi (416) de la partie principale (103) en regard.

5. Aéronef (10) comportant au moins une aile (100) selon l'une des revendications précédentes.

## Patentansprüche

1. Flügel (100) eines Luftfahrzeugs (10), wobei der Flügel (100) Folgendes umfasst:
- einen festen Hauptteil (103),
- einen Vorflügel (102), der vor dem Hauptteil (103) zwischen einer eingefahrenen Stellung, in der er vorn am Hauptteil (103) anliegt, und einer ausgefahrenen Stellung, in der er zur Vorderseite des Hauptteils (103) hin abgehoben ist, bewegbar ist, wobei der Vorflügel (102) eine saugseitige Hinterkante (208), die in der eingefahrenen Stellung entlang einer Saugseite des Hauptteils (103) verläuft, und eine druckseitige Hinterkante (210), die in der eingefahrenen Stellung entlang einer Druckseite des Hauptteils (103) verläuft, aufweist, wobei der Flügel (100) dergestalt ist, dass der Hauptteil (103) eine saugseitige Wand (216), die in der eingefahrenen Stellung des Vorflügels (102) hinter der saugseitigen Hinterkante (208) und mit dieser fluchtend angeordnet ist, und eine druckseitige Wand (218), die in der eingefahrenen Stellung des Vorflügels (102) hinter der Hinterkante (210) und mit dieser fluchtend angeordnet ist, aufweist, wobei der Flügel (100) in der eingefahrenen Stellung des Vorflügels (102) ein saugseitiges Spiel (220) zwischen dem Ende der saugseitigen Hinterkante (208) des Vorflügels (102) und dem Ende der saugseitigen Wand (216) des Hauptteils (103), die einander zugewandt sind, und ein druckseitiges Spiel (222) zwischen dem Ende der druckseitigen Hinterkante (210) des Vorflügels (102) und dem Ende der druckseitigen Wand (218) des Hauptteils (103), die einander zugewandt sind, aufweist, wobei der Flügel (100) einen saugseitigen Kanal (224) hinter dem saugseitigen Spiel (220) und einen druckseitigen Kanal (226) hinter dem druckseitigen Spiel (222) aufweist und wobei der Flügel (100) ein Ansaugsystem umfasst, das mit jedem Kanal (224, 226) verbunden und dazu angeordnet ist, im Kanal (224, 226) enthaltene Luft anzusaugen.

2. Flügel (100) nach Anspruch 1, **dadurch gekennzeichnet, dass** der Flügel (100) eine saugseitige Dichtung (228) umfasst, die in der eingefahrenen Stellung zwischen dem Hauptteil (103) und dem Vorflügel (102) nahe und vor dem saugseitigen Spiel (220) positioniert ist, und dadurch, dass der Flügel (100) eine druckseitige Dichtung (230) umfasst, die in der eingefahrenen Stellung zwischen dem Hauptteil (103) und dem Vorflügel (102) nahe und vor dem druckseitigen Spiel (222) positioniert ist.

3. Flügel (100) nach einem der Ansprüche 1 oder 2, **dadurch gekennzeichnet, dass** der Vorflügel (302) in der Verlängerung zumindest einer seiner Hinterkanten (308) eine Mehrzahl von Zähnen (350) umfasst, wovon sich jeder von der Hinterkante (308) und in der eingefahrenen Stellung bis zum zugewandten Ende der Wand (316) des Hauptteils (103) erstreckt.

4. Flügel (100) nach einem der Ansprüche 1 oder 2, **dadurch gekennzeichnet, dass** das Ende zumindest einer Wand (416), das einer Hinterkante (408) des Vorflügels (402) zugewandt ist, eine gerändelte Form aufweist und die Hinterkante (408) eine im Wesentlichen komplementäre gerändelte Form aufweist und eine Mehrzahl von Zähnen (450) umfasst, wovon sich jeder von der Hinterkante (408) und in der eingefahrenen Stellung bis zum zugewandten Ende der Wand (416) des Hauptteils (103) erstreckt.

5. Luftfahrzeug (10), umfassend zumindest einen Flügel (100) nach einem der vorangehenden Ansprüche.

## Claims

1. Wing (100) of an aircraft (10), said wing (100) comprising:
- a fixed main part (103);
- a movable leading edge slat (102) at the front of the main part (103) between a retracted position, in which it is adjoined to the front of the main part (103), and a deployed position, in which it is lifted towards the front of the main part (103),
the leading edge slat (102) has an upper surface rear edge (208), which, in the retracted position, is alongside an upper surface of the main part (103), and a lower surface rear edge (210), which, in the retracted position, is alongside a lower surface of the main part (103),
the wing (100) being such that the main part (103) has an upper surface wall (216), which, in the retracted position of the leading edge slat (102), comes downstream and in the alignment of the upper surface rear edge (208), and a lower surface wall (218), which, in the retracted position of the leading edge slat (102), comes downstream and in the alignment of the lower surface rear edge (210), the wing (100) having, in the retracted position of the leading edge slat (102), an upper surface gap (220) between the end of the upper surface rear edge (208) of the leading edge slat (102) and the end of the upper surface wall (216) of the main part (103) that are facing each other, and a lower surface gap (222) between the end of the lower surface rear edge (210) of the leading edge slat (102) and the end of the lower surface wall (218) of the main part (103) that are facing each other, the wing (100) having an upper surface channel (224) downstream of the upper surface gap (220) and a lower surface channel (226) downstream of the lower surface gap (222), and the wing (100) comprising a suction system connected to each channel (224, 226) and arranged to suck the air contained in said channel (224, 226).

2. Wing (100) according to Claim 1, **characterized in that** the wing (100) comprises an upper surface seal (228), which, in the retracted position, is positioned between the main part (103) and the leading edge slat (102) in the vicinity of and upstream of the upper surface gap (220), and **in that** the wing (100) comprises a lower surface seal (230), which, in the retracted position, is positioned between the main part (103) and the leading edge slat (102) in the vicinity of and upstream of the lower surface gap (222).

3. Wing (100) according to either of Claims 1 and 2, **characterized in that** the leading edge slat (302) comprises, in the extension of at least one of the rear edges (308) thereof, a plurality of teeth (350), each of which extends from said rear edge (308) and, in the retracted position, up to the end of the wall (316) of the facing main part (103).

4. Wing (100) according to either of Claims 1 and 2, **characterized in that** the end of at least one wall (416) that is facing a rear edge (408) of the leading edge slat (402) assumes a castellated shape and the rear edge (408) assumes a substantially complementary castellated shape and it comprises a plurality of teeth (450), each of which extends from said rear edge (408) and, in the retracted position, up to the end of the wall (416) of the facing main part (103).

5. Aircraft (10) comprising at least one wing (100) according to one of the preceding claims.
